# EUROPEAN PATENT APPLICATION

(11) **EP 2 177 444 A1**
(43) Date of publication of application: **21.04.2010**
(21) Application number: 08792028.6
(22) Date of filing: 25.07.2008
(51) Int. Cl.: B65D 25/42, H01M 8/04

(54) **COUPLER**

(30) Priority: 26.07.2007 JP 2007194432
(71) Applicant: Toyo Seikan Kaisha, Ltd., Tokyo 100-8522 (JP); Kabushiki Kaisha Toshiba, Minato-ku, Tokyo 105-8001 (JP)
(72) Inventor: YOSHIHIRO, Kenji, Yokohama-shi Kanagawa 230-0001 (JP); HAMADA, Yorihisa, Yokohama-shi Kanagawa 230-0001 (JP); TAKAHASHI, Kenichi, Yokohama-shi Kanagawa 235-8522 (JP)
(74) Representative: Schupfner, Georg
(86) International application number: PCT/JP2008/063815
(87) International publication number: WO 2009/014265

(57) **Abstract**

A couple 10 includes a valve seal member 71 (36) provided in a flow path between a valve 35 and a coupler main body 31 which can be opened and closed, and a container-inside-outside seal member (73) which is used as both a container seal member (73) for forming a seal between the container main body 31 and a valve holder 38 and a holder seal member (73) for forming a seal between the coupler main body 31 and the valve holder 38. By this arrangement, the number of the seal members can be reduced, processes for assembling can be simplified and the manufacturing cost can be saved. Mounting position of the holder 38 can be controlled by a mounting position control section 74 to enable sealing for maintaining energizing force by energizing means 39 constant and ensuring opening of the coupler as well as for securing the sealed state accurately.

## Description

### Technical Field

This invention relates to a coupler comprising a pair of a socket and a plug which are detachably fitted and coupled to each other and used for pouring liquid or the like from a container main body such as a bottle on a cartridge side to a container main body such as a tank on a device side or exchanging a container main body. More particularly, the invention relates to a coupler of this type in which the number of seal members can be reduced and which is particularly useful as a coupler between a cartridge type container for a methanol fuel cell and a main body of the fuel cell.

### Background Art

Various liquid type fuel cells which can generate electricity directly from a liquid fuel have recently been developed. Attention has been paid to using a direct methanol fuel cell (DMFC) using methanol as a fuel as a power source of portable type electronic devices because it does not require a reformer and hence it can be made in a compact design.

Particularly, in a direct methanol fuel cell (DMFC) which is called a passive type fuel cell, as disclosed in Japanese Patent Application Laid-open Publication No. 2005-71713, a fuel cartridge housing methanol which is liquid fuel is coupled to a fuel tank provided on the side of the fuel cell to directly supply methanol and thereby obviate a pump for supplying fuel and enable a further compact design.

For supplying methanol in such direct methanol fuel cell (DMFC), a coupler comprising a pair of a socket and a plug is provided which socket and plug are provided in the fuel cell main body and the fuel cartridge main body housing methanol and respectively comprise a valve mechanism having a valve and a spring which energizes the valve in a closing direction. This coupler is coupled to communicate the respective valve mechanisms to each other in a sealed state to supply liquid fuel and, in a detached state, the respective valve mechanisms are closed to a sealed state.

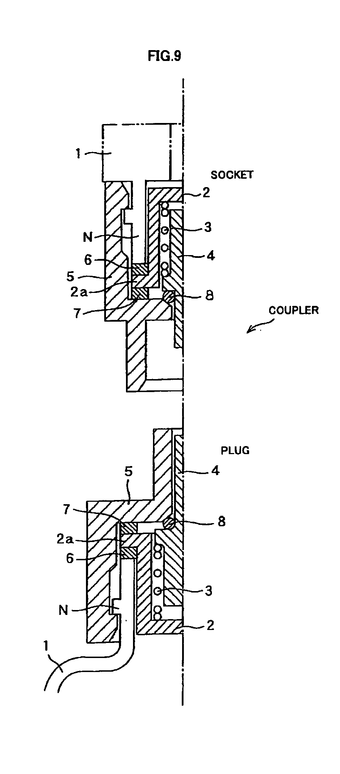

For mounting a plug of such coupler to, e.g., a fuel cartridge main body, as schematically shown in the lower portion of FIG. 9, a flange portion 2a of a valve holder 2 is placed above the upper end of a neck portion N of a soft type bottle 1 which constitutes a container main body, a valve 4 is housed via an energizing means 3 in the valve holder 2, and the valve holder 2 and the valve 4 are covered by a plug main body 5 having a flow path which is opened and closed by the valve 4. Similarly, for mounting a socket to a fuel cell main body, as shown in the upper portion of FIG. 9, a flange portion 2a of a valve holder 2 is placed below the lower end portion of a neck portion N of a fuel tank 1 which constitutes a container main body, a valve 4 is housed via an energizing means 3 in the valve holder 2, and the valve holder 2 and the valve 4 are covered by a socket main body 5 having a flow path which is opened and closed by the valve 4.

In the plug of such coupler, there are three seal sections and a seal member needs to be provided in each of these seal sections. More specifically, a container seal member 6 is provided between the upper end of the neck portion N of the soft type bottle 1 and the lower surface (inside surface) of the flange portion 2a of the valve holder 2, a holder seal member 7 is provided between the upper surface (outside surface) of the flange portion 2a of the valve hodler 2 and the plug main body 5 to secure a seal in a state in which the coupler is mounted on the soft type bottle 1, and a valve seal member 8 is provided in a flow path which is opened and closed between the valve 4 and the plug main body 5 to secure a seal in opening and closing of the valve 4. The same is the case with the socket of such coupler.

In this type of coupler, seal members corresponding to the number of seal sections are required resulting in requirement for a large number of seal members and also a large number of processes for assembling. It is therefore desired to improve the seal mechanism so that the number of seal member can be reduced and the processes for assembling can be simplified.

There is another problem in this type of coupler. That is, the relative position between the valve and the valve holder changes depending upon state of fastening of the holder seal member provided between the valve holder and the plug main body and, as a result, energizing force for energizing the valve also changes.

### Disclosure of the Invention

The present invention has been made in view of the above described problems and desires regarding the prior art and it is an object of the invention to provide a coupler in which the number of seal members is reduced and energizing force for energizing the valve can be maintained constant.

For solving the above described problems of the prior art, in the first aspect of the invention, there is provided a coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, characterized in that at least one of the socket and the plug comprises: a container seal member for forming a seal between the container main body and the valve holder; and a double-purpose seal member which is used as both a holder seal member for forming a seal between the coupler main body and a flange portion provided in the valve holder and a valve seal member provided in a flow path between the valve and the coupler main body which can be opened and closed.

According to this coupler, since at least one of the socket and the plug comprises a container seal member for forming a seal between the container main body and the valve holder and a double-purpose seal member which is used as both a holder seal member for forming a seal between the coupler main body and the valve holder and a valve seal member provided in a flow path between the valve and the coupler main body which can be opened and closed, the number of the seal members is reduced and the number of processes for assembling is also reduced whereby the manufacturing cost can be reduced.

Moreover, since the valve seal member is fixed independently from the valve by the holder seal member, the flow path can be closed accurately by the valve.

In the second aspect of the invention, there is provided a coupler wherein, in addition to the structure of the first aspect, the double-purpose seal member is made of a flat packing having a generally flat plate shape.

According to this coupler, since the double-purpose seal member is made of a flat packing having a generally flat plate shape, the seal member can be made less expensively than an O-ring seal member.

In the third aspect of the invention, there is provided a coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, characterized in that at least one of the socket and the plug comprises a valve seal member provided in a flow path between the valve and the coupler main body which can be opened and closed, and a container-inside-outside seal member which is used as both a container seal member for forming a seal between the container main body and a flange portion provided in the valve holder and a holder seal member for forming a seal between the coupler main body and the valve holder.

According to this coupler, since at least one of the socket and the plug comprises a valve seal member provided in a flow path between the valve and the coupler main body which can be opened and closed, and a container-inside-outside seal member which is used as both a container seal member for forming a seal between the container main body and a flange portion provided in the valve holder and a holder seal member for forming a seal between the coupler main body and the valve holder, the number of the seal members is reduced and the number of the processes for assembling is also reduced whereby the manufacturing cost can be reduced.

In the fourth aspect of the invention, there is provided a coupler wherein, in addition to the structure of the third aspect, the container-inside-outside seal member is made of an O-ring.

According to this coupler, since the container-inside-outside seal member is made of an O-ring, the seal member can be assembled for sealing in a simple manner.

In the fifth aspect of the invention, there is provided a coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, characterized in that at least one of the socket and the plug comprises a valve seal member provided in a flow path between the valve and the coupler main body which can be opened and closed, a container seal member for forming a seal between the container main body and a flange portion provided in the valve holder, and a holder seal member for forming a seal between the coupler main body and the valve holder, and the valve seal member, the container seal member and the holder seal member are formed integrally around the outer periphery of the flange portion of the valve holder.

According to this coupler, since at least one of the socket and the plug comprises a valve seal member, a container seal member and a holder seal member for forming a seal between the coupler main body and the valve holder which seal all necessary seal sections, and these seal members are formed integrally around the outer periphery of the flange portion of the valve holder, the number of the seal members is reduced and the manufacturing cost is reduced.

In the sixth aspect of the invention, there is provided a coupler wherein, in addition to the structure of the fifth aspect, the valve seal member, the container seal member and the holder seal member are formed integrally through a communicating section formed in the flange portion of the valve holder.

According to this coupler, since the valve seal member, the container seal member and the holder seal member which seal all necessary seal sections are formed integrally through a communicating section formed in the flange portion of the valve holder, the seal members are fixed to the flange portion of the valve holder whereby the seal members can be assembled in a stable manner without causing torsion or the like to the seal members during assembling.

In the seventh aspect of the invention, there is provided a coupler wherein, in addition to the structure of the fifth or sixth aspect, a lip portion is formed in at least one of the valve seal member, the container seal member and the holder seal member.

According to this coupler, since a lip portion is formed in at least one of the valve seal member, the container seal member and the holder seal member, the seal surface pressure can be increased by the lip portion and the sealing property thereby can be improved.

In the eighth aspect of the invention, there is provided a coupler comprising, in addition to the structure of the first to the fourth, sixth and seventh aspects, further a mounting position control section for controlling mounting position of the valve holder which is mounted in a sealed state in such a manner that the valve holder can be sealed and the energizing force by the energizing means can be maintained constant.

According to this coupler, since the coupler comprises a mounting position control section for controlling mounting position of the valve holder which is mounted in a sealed state in such a manner that the valve holder can be sealed and the energizing force by the energizing means can be maintained constant, the mounting position of the valve holder to the container main body becomes constant by the mounting position control section regardless of a fastening state of the seal member whereby valve opening and seal state of the coupler can be maintained accurately.

In the ninth aspect of the invention, there is provided a coupler wherein, in addition to the structure of the eighth aspect, the mounting position control section is provided in at least one of the valve holder and the coupler main body.

According to this coupler, since there is provided a coupler wherein, in addition to the structure of the eighth aspect, the mounting position control section is provided in at least one of the valve holder and the coupler main body, the mounting control section can be provided in a simple manner.

In the tenth aspect of the invention, there is provided a coupler comprising, in addition to the structure of the eighth or ninth aspect, the mounting position control section, a valve seal member provided in a flow path between the valve and the coupler main body which can be opened and closed, a container seal member for forming a seal between the container main body and a flange portion provided in the valve holder, and a holder seal member for forming a seal between the coupler main body and the valve holder

According to this coupler, since the mounting position control section, a valve seal member provided in a flow path between the valve and the coupler main body which can be opened and closed, a container seal member for forming a seal between the container main body and a flange portion provided in the valve holder, and a holder seal member for forming a seal between the coupler main body and the valve holder, the mounting position becomes constant by the mounting position control section regardless of a fastening state of the seal member whereby valve opening and seal state of the coupler can be maintained accurately and, further, the seal state can be further accurately by the three seal members.

### Brief Description of the Drawings

FIG. 1A shows a vertical section of a socket and a plug constituting a coupler of the invention in a case where the coupler is applied to a fuel cell in which the socket is separated from the plug and FIG.1B shows a bottom view of the socket.
FIG. 2 is an explanatory view of a plug and a socket of an embodiment of the coupler of the invention schematically showing a seal portion only, omitting a part such as a flow path.
FIG. 3 is an explanatory view of a plug of another embodiment of the coupler of the invention schematically showing a seal portion only, omitting a part such as a flow path.
FIG. 4 is an explanatory view of the plug and socket of an embodiment of the coupler of the invention schematically showing a seal portion only, omitting a part such as a flow path.
FIG. 5 is an explanatory view of a plug of another embodiment of the coupler of the invention schematically showing a seal portion only, omitting a part such as a flow path.
FIG. 6 is an explanatory view of a plug of another embodiment of the coupler of the invention schematically showing a seal portion only, omitting a part such as a flow path.
FIG. 7 is an explanatory view of a plug of another embodiment of the coupler of the invention schematically showing a seal portion only, omitting a part such as a flow path.
FIGs. 8A, 8B and 8C are explanatory views of plugs of another embodiment of the coupler of the invention schematically showing a seal portion only, omitting a part such as a flow path.
FIG. 9 is an explanatory sectional views of a prior art coupler schematically showing a seal portion only, omitting a part such as a flow path.
FIG. 10 is an explanatory view of a plug of another embodiment of the coupler of the invention schematically showing a seal portion only, omitting a part such as a flow path.
FIG. 11 is an explanatory view of a plug of another embodiment of the coupler of the invention schematically showing a seal portion only, omitting a part such as a flow path.
FIG. 12 is an explanatory view of a plug of still another embodiment of the coupler of the invention schematically showing a seal portion only, omitting a part such as a flow path.

### Description of Preferred Embodiments

Description will be made about embodiments of the invention with reference to the accompanying drawings.

Description will be first made about the entire construction of the coupler of the invention taking, by way of example, a case where the coupler is applied for coupling a fuel cell main body and a cartridge main body for supplying fuel.

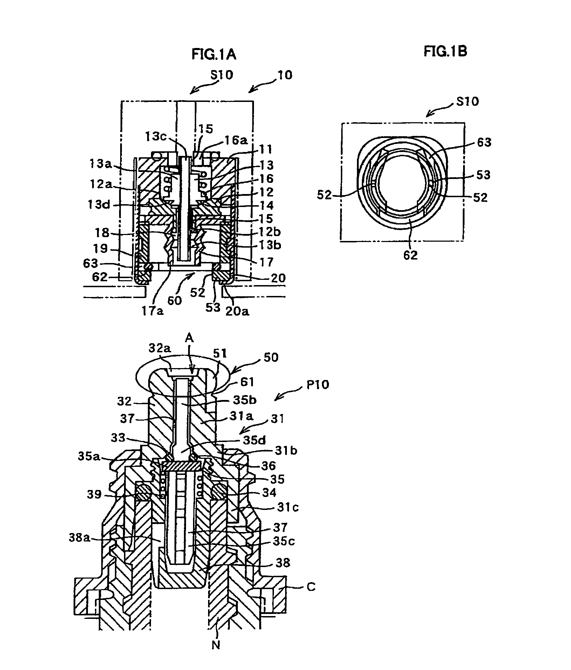

FIG. 1A shows a vertical section of a socket and a plug constituting a coupler of the invention in a case where the coupler is applied to a fuel cell in which the socket is separated from the plug and FIG.1B shows a bottom view of the socket.

This coupler 10 for a fuel cell (hereinafter simply referred to as "coupler") is made of a socket S10 and a plug P10 which is fitted and coupled with this socket S10. The socket S10 is provided, for example, in a fuel tank which constitutes a container main body of a methanol fuel cell and the plug P10 is provided in a bottle which constitutes a container main body of a cartridge main body used as a methanol container. By causing the socket S10 to communicate with the plug P10, the coupler is used for supplying fuel from the cartridge main body to the fuel cell, or exchanging the cartridge. In the coupler of this invention, the container main bodies include the tank of the fuel cell and the bottle of the cartridge.

As the main portion of this socket S10 except for a part of components such as a spring is used a non-metal material such, for example, as polypropyrene (PP), polyphenylene sulfide (PPS), high density polyethylene (HDPE) and polystyrene (PS) and also super engineering plastics having methanol-proof property including polyether ether ketone (PEEK) and liquid crystal polymer (LCP) and general use engineering plastics including polyethylene terephthalate (PET) and polybutylene terephthalate (PBT) and polyacetal (POM).

As for rubber, for example, nitrile rubber (NBR), styrene-butadiene rubber (SBR), fluorine-contained rubber (FKM), chloroprene rubber (CR), ethylene propyrene rubber (EPT, EPDM) and silicone rubber (VMQ) may be used as a proper material.

In the following description, explanation will be made on the basis of directions shown in the drawings. This explanation however in no way restricts fitting and coupling directions in which the coupler will be actually used. The coupler may be coupled in any direction.

In the socket S10 of this coupler 10, a generally cylindrical socket member 11 having a valve chamber inside is mounted in and fixed to a recessed mounting opening which communicates with the fuel tank which constitutes the container main body formed in the fuel cell.

A valve seat member 12 is connected to an opening in the lower portion of the socket member 11. The conical surface formed in the upper surface side of the valve seat member 12 constitutes a valve seat 12a and a cylindrical valve guide section 12b extending downwardly is integrally formed in the central portion of the valve seat member 12.

A valve 13 is mounted above the valve seat member 12 in a valve chamber of the socket member 11. In the valve 13, a central valve head 13a of a generally large cylindrical shape, a valve stem 13b of a generally small cylindrical shape extending from the lower central portion of the valve head 13a and a guide portion 13c extending from the upper central portion of the valve head 13 are formed integrally. The valve stem 13b is mounted in the valve guide portion 12b to reciprocate therein. An O-ring groove 13d is formed in the lower end portion of the valve head 13a and an O-ring 14 is mounted in the O-ring groove 13d. The valve stem 13b and the guide portion 13c extending from the central lower and upper end are formed respectively with a plurality of grooves which constitutes flow paths 15. The valve chamber positioned in the valve 13 communicates with the fuel cell positioned above and the valve chamber communicates with a plug connecting portion provided below for connection with the plug respectively through the flow paths 15..

On the outside of the valve head 13a is mounted a compression coil spring 16 which abuts in its lower end against the valve head 13 and is held in its upper end by a spring press member 16a fixed to the upper end portion of the socket member 11. In a central opening formed in the spring press member 16a, the guide portion 13c is mounted. The compression coil spring 16 is exposed to liquid fuel and, therefore, should preferably be made of a material having anti-corrosion property such, for example, as a metal spring applied with non-conduction treatment or gold coating.

By this arrangement, the valve 13 is constantly energized downwardly and the valve is closed by pressing the O-ring 14 mounted in the O-ring groove 13d of the valve head 13a against the valve seat 12a for sealing whereas the valve is opened by moving the O-ring 14 away from the valve seat 12a against the force of the compression coil spring 16.

A rubber holder 17 in the form of an elastic holder is provided below the valve seat member 12 in a manner to cover the valve stem 13b which reciprocates through the valve guide portion 12b. The upper flange portion of the rubber holder 17 is in abutting engagement with the valve seat member 12 and the central opening portion thereof is in abutting engagement with the outer periphery of the valve guide portion 12b and the inside of the central opening portion constitutes a flow path. The rubber holder 17 is formed with a bellows portion extending downwardly from the central opening portion and a lower end seal portion 17a which constitutes a seal surface A with the plug. By the bellows configuration and elastic property of the rubber holder, the rubber holder 17 can stretch and contract vertically to secure an inside flow path 18 in a sealed state.

A cylindrical housing 19 which forms a plug connection space for connection with the plug P10 is provided outside of the rubber holder 17 and below the socket member 11. The socket member 11, the rubber holder 17 and the housing 19 are integrally connected together by means of a connecting cylinder 20 which is fitted from the outside of the end portion of the housing 19 to the outer periphery of the housing 19 and the socket member 11. A tight connection of these members is achieved by, for example, inserting an unillustrated engaging projection of an unillustrated recess of the connecting cylinder 20 and inserting a projecting portion formed by bending a part of the connecting cylinder 20 in U-shape into an engaging recess formed in the housing 19 and thereby holding the flange portion of the rubber holder 17.

In the socket S10 having the above described structure, the valve can be automatically opened and closed by operation of the valve stem 13b of the valve 13 accompanying coupling with the plug P10.

As the main portion of the plug P10 which is fitted and coupled to the socket S10 except for a part of components such as a spring is used a non-metal material such, for example, as polypropyrene (PP), polyphenylene sulfide (PPS), high density polyethylene (HDPE) and polystyrene (PS) and also super engineering plastics having methanol-proof property including polyether ether ketone (PEEK) and liquid crystal polymer (LCP) and general use engineering plastics including polyethylene terephthalate (PET) and polybutylene terephthalate (PBT) and polyacetal (POM).

As for rubber, for example, nitrile rubber (NBR), styrene-butadiene rubber (SBR), fluorine-contained rubber (FKM), chloroprene rubber (CR), ethylene propyrene rubber (EPT, EPDM) and silicone rubber (VMQ) may be used as a proper material.

This plug P10 is mounted, as shown in FIG. 1, on the outer periphery of the upper end portion of a nozzle N of an inner container which constitutes a container main body housing methanol constituting fuel of the fuel cell. The plug P10 has a plug main body 31 of a generally three-stage configuration which is held by a cap C which is screwed onto an outer container covering the inner container. An upper portion 31a has the smallest diameter and a lower portion 31c which continues to a middle portion 31b has the largest diameter.

The plug main body 31 is formed with a projecting connecting portion 32 having a smaller diameter and a generally cylindrical configuration and this projecting connecting portion 32 is mounted in the connecting cylinder 20 forming the plug connection space of the socket S10. The projecting connecting portion 32 is formed in its tip end portion with a seal recess 32a which forms the contact seal surface A when the lower end seal portion 17a of the rubber holder 17 of the socket S10 is inserted in the seal recess 32a. The central opening of the plug main body 31 has a size which is sufficient for inserting the valve stem 13b of the socket S10.

This seal recess 32a is formed in a tapered recess which has a large diameter in its upper end opening portion and a small diameter in its base portion so that the rubber holder 17 of the socket S10 will be guided to the center of the seal recess 32a by this tapered surface. Besides, since this seal recess 32a is provided in such a manner that the tip end portion of the plug P10 is recessed, even if a liquid fuel remains on the tip end portion of the plug P10 when the plug P10 is detached from the socket S10, the remaining liquid fuel can be received in the seal recess 32a whereby contact with the remaining liquid fuel can be avoided.

Instead of forming the seal recess 32a in the tapered recess, it may be formed in other shape such, for example, as a cylindrical recess in which seal is made in the bottom surface so that remaining liquid fuel can be received therein.

The middle portion 31b of the plug main body 31 is formed with a conical surface in the inside thereof to provide a valve seal 33.

In the inner periphery of the cylindrical portion having the largest diameter of the lower portion 31c of the plug main body 31, the nozzle N of the inner container is inserted via an O-ring 34. By holding a stepped portion between the middle portion 31b and the lower portion 31c of the plug main body 31 with the holding cap C which is screwed onto the nozzle of the outer container in which the inner container is housed, the plug main body 31 can be attached to the container.

On the inner side of the plug main body 31 is mounted a valve 35. The valve 35 has a valve head 35a in the form of a middle large diameter plate, a small diameter valve stem 35b extending upwardly from the upper central portion of the valve 35 and a large diameter guide portion 35c extending from the lower central portion of the valve 35. The valve stem 35b and the valve guide portion 35c are formed integrally with the valve head 35a. The valve stem 35b extending upwardly from the upper central portion is reciprocably located in the projecting connecting portion 32.

In the upper end portion of the valve head 35a of the valve 35 is formed an O-ring groove 35d opposite to the valve seat 33 and an O-ring 36 is mounted in the O-ring groove 35d.

The valve stem 35b and the guide portion 35c extending respectively upwardly and downwardly from the central portion of the valve head 35a are formed in their side surfaces with a plurality of grooves which constitute flow paths 37. These flow paths 37 communicate with the inside of the inner container via the lower guide portion 35c and the socket S10 to be fitted and coupled via the upper valve stem 35b.

For guiding reciprocating movement of the valve 35, a valve holder 38 having a generally cylindrical shape is provided in a manner to surround the guide portion 35c. A middle flange portion of the valve holder 38 is in abutting engagement with an end surface of the middle portion 31b of the plug main body 31 below the valve seat 33 and the lower surface of the flange portion is in abutting engagement with the O-ring 34 of the inner container. The valve holder 38 is screwed into a screw portion provided in the inner periphery of the middle portion 31b.

A compression coil spring 39 is mounted on the outer periphery of the guide portion 35c of the valve 35. The upper end of the spring 39 is in abutting engagement with the valve head 35a and the lower end of the spring 39 is held by a projecting portion in the middle of the valve holder 38. Since the compression coil spring 39 is exposed to liquid fuel, it should preferably be made of a material which has a good anti-corrosion property, e.g., a metal spring applied with a non-conduction treatment or gold coating.

By this arrangement, the valve 35 is constantly urged upwardly to press the O-ring 36 mounted in the O-ring groove 35d of the valve head 35a to the valve seat 33 and thereby close the valve and, by causing the valve to space away against the force of the compression coil spring 39, the valve can be opened.

The valve holder 38 is formed in its lower side wall portion with a flow path opening 38a for communication with the inner container.

In the plug P10 having the above described construction, the valve can be opened and closed automatically by operation of the valve stem 35b of the valve 35 accompanying coupling of the plug P10 with the socket S10.

In this coupler 10, for discriminating the socket S10 and the plug P10 in order to, for example, enable fitting and coupling between only the socket S10 and the plug P10 for a specific fuel concentration, a key and a key groove are provided as discrimination means. The key is provided in one of the socket S10 and the plug P10 and the key groove is provided in the other.

By providing the key and key groove, the socket S10 and the plug P10 which cannot be coupled can be discriminated but, when force is applied between the socket S10 and the plug P10 for rotating the socket S10 and the plug P10 for relative rotation about their central axes, the rotation is restricted by the key and the key groove and, as a result, either one of the socket S10 and the plug P10 may be damaged when large force is applied.

Therefore, in this coupler 10, the key is made to rotate about the central axis for preventing damage due to excessive rotational force.

In this coupler 10, as shown in Fig. 1, the projecting connecting portion 32 of the plug main body 31 of the plug P10 is formed in its outside peripheral surface with a key groove 51 extending in a direction of fitting and this key groove 51 constitutes discrimination means 50. For example, key grooves 51 are formed in diametrically opposite positions (only one key groove is shown in FIG. 1A) in a depth corresponding to the distance of fitting of the plug P10.

On the other hand, a key 52 which engages in the key groove 51 is formed integrally with an annular key ring 53 on the inside thereof in a position corresponding to the key groove 51. The key ring 53 is provided at the lower end of the housing 19 of the socket S10 and is held by a caulked portion 20a of the connecting cylinder 20 and is rotatable about the central axis of the plug P10.

By fitting engagement of the key 52 formed on the key ring 53 mounted on the socket S10 with the key groove 51 formed in the plug P10, the socket S10 and the plug P10 can be discriminated.

Many kinds of sockets and plugs can be discriminated by not only the above described structure in which the key grooves 51 and the keys 52 are provided at diametrically opposite positions but also by other structure such as varying width and depth of the key groove and the key to prevent combination of a large width and depth with a small width and depth.

When excessive relative rotational force is applied about the central axis between the socket S10 and the plug P10 which are coupled to each other, the key ring 53 is rotated to prevent application of the excessive force to the socket S10 or the plug P10 and thereby prevent damage to them while the coupled state is maintained.

Further, in this coupler 10, connection maintaining means 60 is provided to maintain the coupled state of the socket S10 and the plug P10. By way of example, an engaging portion 61 constitutes one side of the connection maintaining means 60 and an elastic engaging member 62 constitutes the other side of the connection maintaining means 60. By flexing and moving the elastic engaging member 62, the engaging member 62 can engage in the engaging portion 61 for maintaining the coupling state securely and the coupling state can be released by flexing and moving the elastic engaging member 62 out of the engaging portion 61.

In this coupler 10, as the engaging portion 61, an annular engaging recess is formed horizontally in the outer periphery of the upper portion of the projecting connecting portion 32 of the plug main body 31 and the tip end portion of the projecting connecting portion 32 is formed in an accurately curved surface.

On the other hand, the elastic engaging member 62 provided in the socket S10 is provided as a snap ring which is made by forming a spring in U-shape with its opposite ends approaching each other and, as shown in FIG. 1B, a snap ring mounting groove 63 is formed integrally with the end portion of the housing 19. The snap ring 62 is mounted in the snap ring mounting groove 63 with the two end portions and the middle portion of the U-shaped snap ring 62 being held by the snap ring mounting groove 63 in such a manner that the two end portions are elastically widened and narrowed.

By providing the connection maintaining means 60, when the plug P10 is inserted into the socket S10, the tip end portion of the projecting connecting portion 32 is pushed into the socket S10, widening the snap ring which constitutes the elastic engaging member 62 and, as the tip end portion of the projecting connecting portion 32 is inserted into the engaging portion 61, the snap ring is narrowed and engages in the engaging groove and thereafter the fitted and coupled state of between the socket S10 and the plug P10 is maintained.

When it is attempted to pull off the plug P10 from the fitted and coupled state, the snap ring constituting the elastic engaging member 62 is deformed in a manner to be widened and is disengaged from the engaging groove constituting the engaging portion 61 of the plug P10 whereby the plug P10 can be separated from the socket S10.

Although illustration has been omitted, it is desirable that, when excessive rotational force is applied, in addition to rotation of the key ring 53 for preventing damage, a cam is provided in the plug main body and a cam follower is provided in the key ring 53 to form a cam mechanism so that axial force is produced by the rotation of the key ring and the fitted and coupled state can be automatically released.

Accordingly, by the provision of this cam mechanism, when excessive rotational force exceeding a range of normal use is applied, axial force is produced in addition to rotation of the key ring 53 for preventing damage, whereby the coupled state can be released automatically and the plug P10 can be disengaged from the socket S10 safely and automatically without damaging the device of the main body.

According to such coupler 10, by providing the key groove 51 in one of the socket S10 and the plug P10 and providing the key 52 in the annular member 53 of the other for engaging in the key groove 51, the socket S10 and the plug P10 can be discriminated by the key groove 51 and the key 52 and, when excessive force exceeding a range of normal use is applied, action by such excessive force can be prevented by rotation of the annular member 53.

By this arrangement, in a case where methanol in a container is supplied to a fuel cell or a container itself is exchanged, correct ones can be accurately selected and coupled and, besides, damage due to excessive force can be prevented.

According to this coupler 10, the connection maintaining means 60 is formed by the engaging portion 61 provided in one of the socket S10 and the plug P10 and the elastic engaging member 62 to be engaged in the engaging portion 61 provided in the other and, therefore, by only pushing in the engaging portion 61 by utilizing elastic deformation of the elastic engaging member 62, coupling between the socket S10 and the plug P10 can be maintained and, when the coupling state should be released, it can be realized simply by pulling off of the engaging portion 61.

According to this coupler 10, the key groove 51 and the key 52 are used as the discrimination means 50 for discriminating the plug P10 and the socket S10 and, therefore, the plug P10 and the socket S10 can be discriminated easily by changing configuration (e.g., combination of width and depth), disposition, number etc. of the key groove 51 and the key 52.

A projecting portion and a recessed portion may be provided between the key ring 53 which is an annular member and the housing 19 by which the key ring 53 is rotatably supported. Such projecting portion and a recessed portion constitute rotation resisting means for resisting rotation when the key ring 53 is pressingly supported and enabling rotation when excessive force is applied. By provision of such rotation resisting means, when the socket S10 is coupled with the plug P10, rotation of the key ring 53 is prevented by engagement of the projecting portion with the recessed portion and connection of the key groove 51 and the key 52 can be made easily in substantially stationary state whereas when excessive force is applied, the key ring 53 is rotated overriding the projecting and recessed portions whereby damage can be prevented.

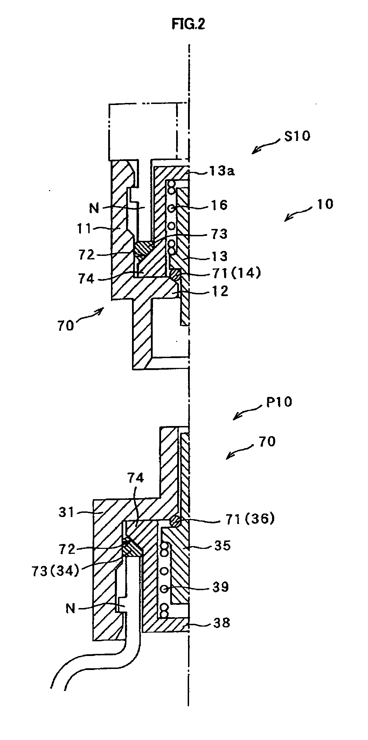

Another embodiment of the coupler of the invention in which the invention is applied to a plug will be described with reference to FIG. 2.

In this coupler 10, as shown in FIG. 2 which schematically show a seal portion only omitting a portion such as a flow path, the seal of the plug P10 and the seal structure for seal of inside and outside of the nozzle N which constitutes a container main body accompanying mounting of the plug P10 are improved for reducing the number of seal members and, similarly, the seal structure of the socket S10 also is improved for reducing the number of seal members.

In a seal structure 70 of the coupler 10, an O-ring 36 is provided as a valve seal member 71 in a flow path which is opened and closed between a valve 35 and a plug main body 31 to seal the plug P10. The lower surface of a flange portion of a valve holder 38 is formed in a conical surface 72 which has a large diameter on the outside of the upper portion of a container and has a small diameter on the inside of the upper portion of the container. An O-ring 34 is provided as a container-inside-outside seal member 73 between the conical surface 72 and the upper end surface of the nozzle N. The outside of the container can be sealed by the outer peripheral surface of the O-ring 34 and the inside of the container can be sealed by the bottom surface of the O-ring 34.

Therefore, compared with the prior art plug shown in FIG. 9 in which one seal member 8 is used for sealing the plug itself and two seal members 6 and 7 are used for sealing the inside and outside of the container, in this coupler 10, the seal members 71 and 73 can be constructed of two O-rings 34 and 36 and, therefore, the number of the seal members is reduced and processes for assembling is also simplified by the reduction of the seal members.

In the plug P10 of this coupler 10, the upper surface of the flange portion of the valve holder 38 which constitutes a mounting position control section 74 is in abutting engagement with the lower surface of the plug main body 31 and, by this arrangement, relative positions of the valve holder 38 and the valve 35 can be controlled to constant positions and energizing force of a compression coil spring 39 constituting energizing means against the valve 35 can be maintained at a constant value.

Accordingly, valve opening pressure of the plug P10 can be made constant by the mounting position control section whereby the valve can be opened accurately and seal can be accurately made in the valve closed state.

In the seal structure 70 of this coupler 10, similarly in the socket S10, an O-ring 14 is provided as a valve seal member 71 in a flow path which is opened and closed between a valve 13 and a socket member 11 having an integrally formed valve seat member 12 to seal the socket S10 itself. The upper surface of a flange portion of a valve holder 13a is formed as a conical surface 72 which has a large diameter on the outside of the lower portion of a nozzle N and has a small diameter on the inside of the lower portion of the nozzle N. An O-ring 73 is provided as an inside and outside seal member for the nozzle N constituting a container main body between the conical surface 72 and the lower surface of the nozzle N. The outside of the nozzle N constituting the container main body can be sealed by the outer periphery surface of the O-ring 73 and the inside of the nozzle N can be sealed by the upper surface of the O-ring 73.

Therefore, compared with the prior art plug shown in FIG. 9 in which one seal member 8 is used for sealing the plug itself and two seal members 6 and 7 are used for sealing the inside and outside of the container, in this coupler 10, the seal members 71 and 73 can be constructed of two O-rings 14 and 73 and, therefore, the number of the seal members is reduced and processes for assembling is also simplified by the reduction of the seal members.

In the socket S10 of this coupler 10, the lower surface of the flange portion of the valve holder 13a which constitutes a mounting position control section 74 is in abutting engagement with the upper surface of the valve seal member 12 which is integrally formed with the socket member 11 and, by this arrangement, relative positions of the valve holder 13a and the valve 13 can be controlled to constant positions and energizing force of a compression coil spring 16 constituting energizing means against the valve 13 can be maintained at a constant value.

Accordingly, valve opening pressure of the socket S10 can be made constant by the mounting position control section whereby the valve can be opened accurately and seal can be accurately made in the valve closed state.

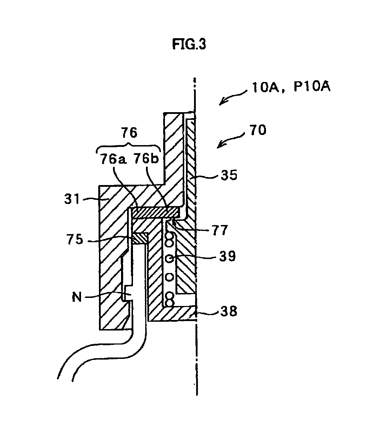

Another embodiment of the invention in which the invention is applied to a plug will be described with reference to FIG. 3.

In a plug P10A of this coupler 10A, a flat packing having a generally flat plate shape is provided as a container seal member 75 on the upper surface of a nozzle N which constitutes a container main body for providing a seal between the nozzle N and a valve holder 38 (i.e., the lower surface of a flange portion of the valve holder 38). A double-purpose seal member 76 made of a flat packing in the form of a disk is provided in a manner to be held between a plug main body 31 and the valve holder 38 and to be projecting toward a valve 35. The double-purpose seal member 76 is used both as a holder seal member 76a which provides a seal between the plug main body 31 and the valve holder 38 (i.e., the upper surface of the flange portion of the valve holder 38) and as a valve seal member 76b which is provided in a flow path which is opened and closed for providing a seal between the valve 35 and the plug main body 31 constituting a coupler main body.

The valve 35 is formed with an annular projection 77 which opposes and contacts the lower surface of the double-purpose seal member 76 for achieving an accurate sealing.

According to this coupler 10A, by using the double-purpose seal member 76 which is used both as the holder seal member 76a and the valve seal member 76b, one seal member can be saved.

Since this double-purpose seal member 76 is held between the plug main body 31 and the valve holder 38, it does not move with the valve 35 as in a case where a valve seal member is formed by mounting an O-ring on the outer periphery of the valve 35 but is accurately opened and closed accompanying reciprocating movement of the valve 35.

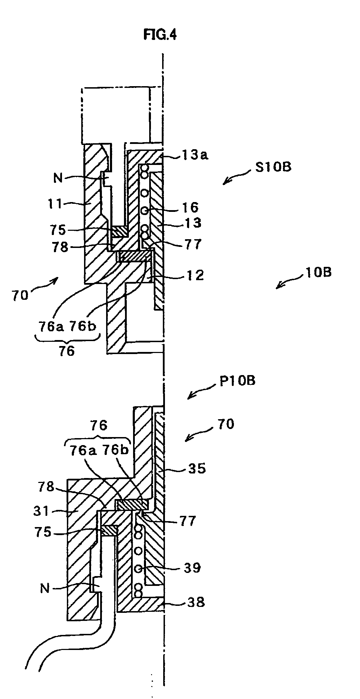

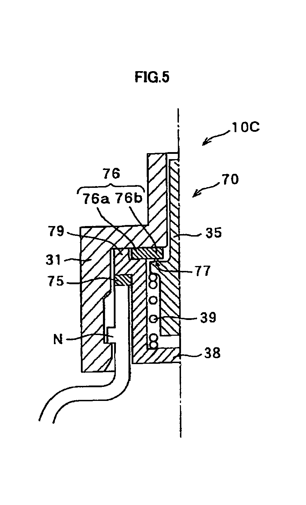

As the seal structure 70 of the coupler of the present invention, as shown in FIG. 4 or FIG. 5, energizing force by a compression coil spring 39 can be made constant by constructing a coupler. More specifically, in couplers 10B and 10C, mounting position of the valve holder 38 is made constant by forming a mounting position control section 78 in the plug main body 31 or by forming a mounting position control section 79 in the valve holder 38 whereby relative positions of the valve main body 31 and the valve holder 38 become constant and energizing force by the compression coil spring 39 can be made constant and, further, one seal member can be saved in comparison with the prior art plug by using the double-purpose seal member 76.

As shown in FIG. 4, the seal structure 70 of this coupler can be applied similarly to the socket. In a socket S10B of this coupler 10B, a flat packing having a generally flat plate shape is provided as a container seal member 75 on the lower surface of a nozzle N which constitutes a container main body for providing a seal between the nozzle N and a valve holder 13a (i.e., the upper surface of a flange portion of the valve holder 13a). A double-purpose seal member 76 made of a flat packing in the form of a disk is provided in a manner to be held between a socket member 11 and the valve holder 13a and to be projecting toward a valve 13. The double-purpose seal member 76 is used both as a holder seal member 76a which provides a seal between the socket member 11 and the valve holder 13a (i.e., the lower surface of the flange portion of the valve holder 13a) and as a valve seal member 76b which is provided in a flow path which is opened and closed for providing a seal between the valve 13 and the socket member 11 constituting a coupler main body.

The valve 13 is formed with an annular projection 77 which opposes and contacts the upper surface of the double-purpose seal member 76 for achieving an accurate sealing.

According to this coupler 10B, by using the double-purpose seal member 76 which is used both as the holder seal member 76a and the valve seal member 76b, one seal member can be saved.

Since this double-purpose seal member 76 is held between the socket member 11 and the valve holder 13a, it does not move with the valve 13 as in a case where a valve seal member is formed by mounting an O-ring on the outer periphery of the valve 13 but is accurately opened and closed accompanying reciprocating movement of the valve 13.

Further, in the socket S10B of the coupler 10B of the invention, since the mounting position control section 78 is formed in the socket member 11, relative positions of the socket member 11 and the valve holder 13a can be made constant and energizing force by the compression coil spring 16 can be made constant.

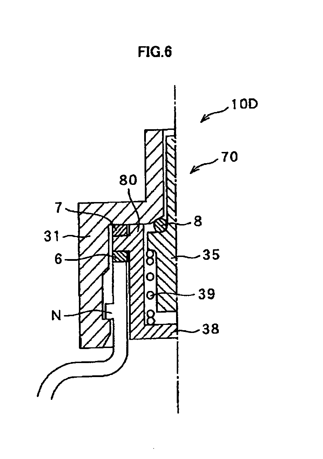

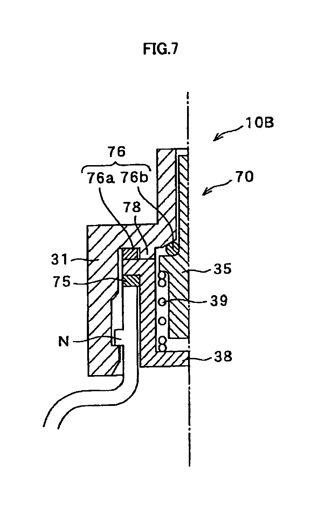

In the coupler of the invention, for making the valve opening pressure of the coupler constant, as shown in a coupler 10D of FIG. 6, a mounting position control section 80 may be formed in a valve holder 38 so that relative positions of a valve 35 and the valve holder 38 can be made constant and energizing force by a compression coil spring 39 can be made constant. In this case also, as shown in a coupler 10B of FIG. 7, a mounting position control section 78 may be formed in a plug main body 31.

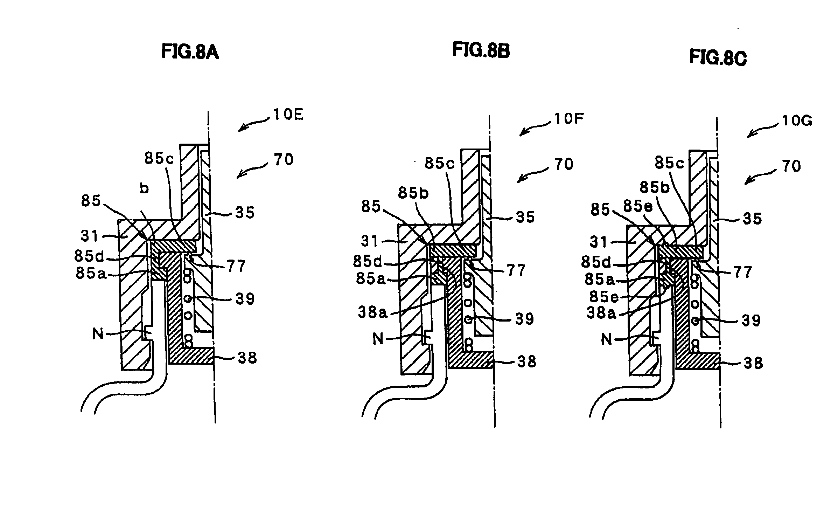

Another embodiment of the invention in which the invention is applied to the plug will be described with reference to FIGs. 8A, 8B and 8C.

In couplers 10E, 10F and 10G, as in FIG. 6 schematically showing the seal portion only, omitting a part of component such as a flow path, the above described seal of the plug itself in the couplers 10 and 10A to 10D and the seal structure for providing a seal in the inside and outside of the nozzle N which is a container main body accompanying coupling of the couplers are modified in such a manner that seal members in these three portions are integrally formed as a single seal member.

In the coupler 10E, seal members in these three portions are formed integrally as a single seal member 85. This seal member 85 has a container seal member 85a which provides a seal between the nozzle N which is a container main body and a valve holder 38 (i.e., the lower surface of a flange portion of the valve holder 38). The container seal member 85a is made of a flat packing having a shape of a disk and is provided on the upper surface of the nozzle N.

Further, as the seal members for sealing the remaining two portions of the seal member 85, the seal member 85 comprises a holder seal member 85b which provides a seal between the plug main body 31 which is a coupler main body and the valve holder 39 (i.e., the upper outside portion of the flange portion of the valve holder 38) and a valve seal member 85c which is provided for sealing in the flow path between the valve 35 and the plug main body 31 for opening and closing. These two seal members are integrally formed by the flat packing having a shape of a disk in a manner to be held between the plug main body 31 and the valve holder 38 and project toward the valve 35.

Thus, as the seal member 85, the container seal member 85a is formed integrally with the holder seal member 85b and the valve seal member 85c via a connecting portion 85d surrounding the outer periphery of the flange portion of the valve holder 38.

Since other structure of the coupler 10E is the same as the one of the coupler 10A, description will be omitted for avoiding duplication.

According to this coupler 10E, by using the seal member 85 in which the container seal member 85a, the holder seal member 85b and the valve seal member 85c are formed integrally via the connecting portion 85d, one seal member can be saved and processes for forming and assembling will be reduced and the manufacturing cost thereby can be saved.

The seal member 85 of the coupler of the present invention may be formed as shown in a coupler 10F shown in FIG. 8B, i.e., by forming a plurality of apertures 38a which vertically penetrate a flange portion of a valve holder 38 and disposing a connecting portion 85d through these apertures 38a to integrally form the seal member 85.

Since other structure of the coupler 10F is the same as the one of the coupler 10E described above, description will be omitted for avoiding duplication.

According to this coupler 10F, since the connecting portion 85d is disposed in the apertures 38a of the flange portion of the valve holder 38, the seal member 85 is fixed to the valve holder 38 whereby the coupler 10F can be assembled in a stable manner without causing distortion to the seal member 85.

The seal member 85 of the coupler of the present invention may be formed as shown in a coupler 10G shown in FIG. 8C, i.e., by forming a plurality of apertures 38a which vertically penetrate a flange portion of a valve holder 38, disposing a connecting portion 85d through these apertures 38a to integrally form the seal member 85, and providing two annular lip portions 85e integrally with the seal member 85 in such a manner that these lip portions 85e project from the seal surfaces of the seal member 85

Since other structure of the coupler 10G is the same as the one of the coupler 10F described above, description will be omitted for avoiding duplication.

According to this coupler 10G, the connecting portion 85d is disposed in the apertures 38a of the flange portion of the valve holder 38 and the two annular lip portions 85e are provided on the seal surfaces, seal surface pressure can be increased by the lip portions 85e of the seal member 85 and the sealing property can thereby be further improved.

In this embodiment, though the lip portions 85e are provided on the upper and lower surfaces of the seal member 85, a single lip portion may be provided on either surface or plurality of lip portions may be provided on each of the upper and lower surfaces.

The lip portions 85e may be provided in the seal member 85 of the coupler 10E which has been described with reference to FIG, 8A. In that case, a similar advantageous effect will be achieved.

Further, although illustration has been omitted, the mounting position control section (78, 79) may be provided between the flange portion of the valve holder 38 and the plug main body 31 of the couplers 10F and 10G so that energizing force by the compression coil spring 39 will be made constant.

According to he coupler 10A of the invention, since the seal member is composed of the two seal members, i.e., the container seal member 75 providing a seal between the container main body and the valve holder (the inner flange portion of the valve holder) and the double-purpose seal member 76 which is used both as the holder seal member 76a for providing a seal between the coupler main body and the valve holder (the outer flange portion of the valve holder) and the valve seal member 76b which is provided for sealing in the flow path between the valve and the coupler main body for opening and closing, the number of the seal member can be saved and processes for assembling can be reduced and the manufacturing cost can be saved. Besides, the valve seal member 76b is fixed by the holder seal member 76a independently from the valve whereby the flow path can be opened and closed accurately by the valve.

According to the coupler 10A, since the double-purpose seal member 76 is made of a flat packing having a generally flat plate shape, the seal member can be made less expensively than in the case where the seal member is made of an O-ring.

According to the coupler 10 of the invention, since the seal member is composed of two seal members, i.e., the valve seal member 71 which is provided for sealing in the flow path between the valve and coupler main body for opening and closing, and the container-inside-outside seal member 73 which is used both as the container seal member for providing a seal between the container main body and the valve holder (the inner flange portion of the valve holder) and the holder seal member for providing a seal between the coupler main body and the valve holder (the outer flange portion of the valve holder), the number of the seal member can be saved, processes for assembling can be reduced and the manufacturing cost can be saved.

Further, according to the coupler 10, since the container-inside-outside seal member 73 is made of an O-ring, it can be assembled in a simple manner.

According to the coupler 10E of the invention, since the seal member 85 which seals all necessary portions of the coupler is formed integrally in such a manner that the valve seal member 85c, the container seal member 85a and the holder seal member 85b are formed integrally with the connecting portion 85d around the periphery of the flange portion of the valve holder 38, the number of the components can be reduced and the manufacturing cost can be reduced.

According to the coupler 10F of the invention, since the seal member 85 which seals all necessary portions of the coupler is formed integrally in such a manner that the valve seal member 85c, the container seal member 85a and the holder seal member 85b are formed integrally with the connecting portion 85d disposed in the apertures 38e formed in the flange portion of the valve holder 38, the seal member 85 can be fixed to the flange portion of the valve holder whereby the coupler can be assembled in a stable manner without causing distortion to the seal member.

According to the coupler 10G of the invention, since the lip portions 85e are formed integrally with the seal member 85 in at least one portion of the seal member 85, the seal surface pressure can be increased and the sealing property thereby can be improved.

According to the couplers 10, 10A, 10B and 10C of the invention, since there are provided the mounting position control sections 74, 78 and 79 for controlling the mounting position of the valve holder which is mounted to the container main body in a sealed state in a manner to enable accurate sealing and maintain energizing force by the energizing means constant, the mounting position of the valve holder to the valve can be made constant regardless of the state of fastening of the seal member whereby the opening of the coupler can be accurately made and the sealed state can be maintained accurately.

According to the couplers 10, 10A, 10B and 10C (10F, 10G) of the invention, since the mounting position control sections 74, 78 and 79 are provided in at least one of the valve holder and the coupler main body, the mounting position control sections can be provided in a simple manner.

Further, according to the coupler 10D of the invention, since this coupler 10D comprises the mounting position control section 80, the valve seal member provided in the flow path between the valve and the coupler main body which can be opened and closed, the container seal member for forming a seal between the container main body and the valve holder (the inner flange portion of the valve holder), and the holder seal member for forming a seal between the coupler main body and the valve holder, the energizing force to the valve is made constant at the mounting position regardless of fastening state of the seal member and opening of the valve can be made accurately and the sealed state can be maintained constant and, moreover, the sealed state can be secured by the three seal members.

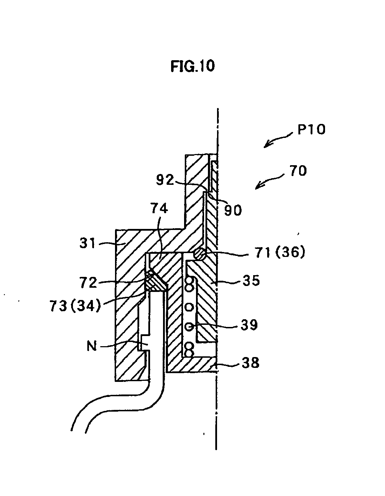

Other embodiments of the coupler of the invention in which the invention is applied to the plug will be described with reference to FIG. 10 to FIG. 12.

In the embodiment of FIGs. 10 - 12, the same components as those shown in FIG. 2 will be designated by the same reference characters and description thereof will be omitted.

In the embodiment of FIG. 2, the O-ring 36 as the valve seal member is pressed by the compression coil spring 39 to a state in which stress of the O-ring 36 is in balance with compression force of the compression coil spring 39. When this state lasts for a long period of time, permanent strain due to compression is produced in the O-ring 36 and, as a result, the tip end position of the valve stem from the base of the plug advances from the initial position. As a result, in coupling the plug and the socket together, the rubber holder (17 in FIG. 1) comes out and the valve stem of the plug and the valve stem of the socket abut each other before sealing thereby to open the valve, resulting in leakage of the liquid.

As an amount of compression of the O-ring 36 by the compression coil spring 39, 20% to 30% of a non-compressed state is allowed as a range within a proper use. In the embodiments shown in FIG. 10 to FIG. 12, therefore, means for controlling the seal position is provided so that the valve stem will not be pushed out exceeding a position at which the O-ring 36 is compressed by 20% to 30% by the compression coil spring 39. More specifically, the upward portion (in the drawing) from a stepped portion 90 of the valve stem is formed with a smaller diameter than the downward portion from the stepped portion 90 while the upward portion from a stepped portion 92 of the inner periphery of the plug main body 31 is formed with a smaller diameter than the downward portion from the stepped portion 92 of the inner periphery of the plug main body 31. Positions of the stepped portions 90 and 92 are determined in correspondence to an initial position of the O-ring 36 at which the O-ring 36 is compressed by 20% - 30% within a range of a proper use. Accordingly, by abutting engagement of the stepped portion 90 of the valve stem with the stepped portion 92 of the plug main body 31, the valve stem which is pressed upwardly (in the drawing) by the compression coil spring 39 comes in engagement with the stepped portion 92 of the plug main body 31 and further upward advance of the valve stem is prevented and excessive compression of the O-ring 36 is also prevented.

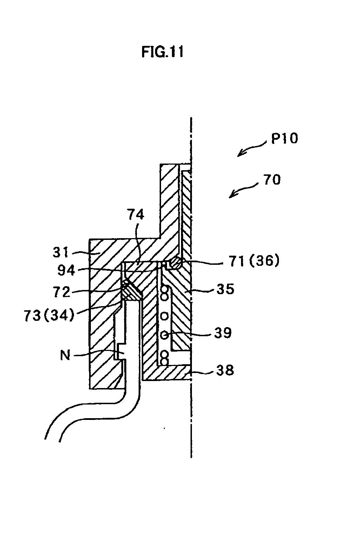

In an embodiment of FIG. 11, the seal position control means is formed by a projection 94 which extends from the upper surface of the valve head of the valve 35 in a radially outward position from the O-ring 36. The projection 94 may be formed annually over the entire circumference of the valve head or, alternatively, may be formed at plural positions in the circumferential direction with a proper interval. The height of the projection 94 from the upper surface of the valve head is determined in correspondence to an initial position of the O-ring 36 at which the O-ring 36 is compressed by 20% - 30% within a range of a proper use in such a manner that, the tip end of the projection 94 abuts against the lower surface of the middle portion of the plug main body 31 at a radially outward position from the valve seat. Accordingly, by the abutting of the projection 94 with the lower surface of the middle portion of the plug main body 31, further upward advance of the valve system which is pressed upwardly by the compression coil spring 39 is prevented and excessive pressing of the O-ring 36 is also prevented.

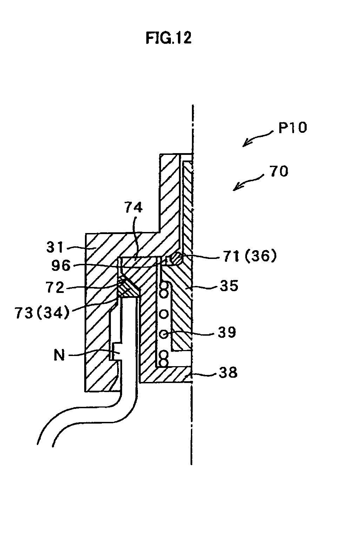

In an embodiment of FIG. 12, the seal position control means is formed by a projection 96 which extends from the lower surface of the middle portion of the plug main body 31 in a radially outward position from the valve seat with which the O-ring 36 is in abutting engagement. The projection 96 may be formed annually over the entire circumference of the lower surface of the middle portion of the plug main body or, alternatively, may be formed at plural positions in the circumferential direction with a proper interval. The height of the projection 96 from the lower surface of the middle portion of the plug main body is determined in correspondence to an initial position of the O-ring 36 at which the O-ring is compressed by 20% - 30% within a range of a proper use in such a manner that, the tip end of the projection 96 abuts against the upper surface of the valve head. Accordingly, by the abutting of the projection 96 with the upper surface of the valve head, further upward advance of the valve stem which is pressed upwardly by the compression coil spring 39 is prevented and excessive pressing of the O-ring 36 is also prevented.

In the embodiments of FIG. 11 and FIG. 12, the projections 94 and 96 may be formed integrally with the valve head and the plug main body or may be provided as separate parts.

### Industrial Utility

The coupler of the invention comprises a pair of a socket and a plug which are detachably fitted and coupled to each other and used for pouring liquid or the like from a container main body such as a bottle on a cartridge side to a container main body such as a tank on a device side or exchanging a container main body. In this coupler, the number of seal members can be reduced and the coupler is particularly useful when it is used as a coupler between a cartridge type container for a methanol fuel cell and a main body of the fuel cell.

## Claims

1. A coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, **characterized in that** at least one of the socket and the plug comprises:
a container seal member for forming a seal between the container main body and the valve holder; and
a double-purpose seal member which is used as both a holder seal member for forming a seal between the coupler main body and a flange portion provided in the valve holder and a valve seal member provided in a flow path between the valve and the coupler main body which can be opened and closed.

2. A coupler as defined in claim 1 wherein the double-purpose seal member is made of a flat packing having a generally flat plate shape.

3. A coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, **characterized in that** at least one of the socket and the plug comprises:
a valve seal member provided in a flow path between the valve and the coupler main body which can be opened and closed; and
a container-inside-outside seal member which is used as both a container seal member for forming a seal between the container main body and a flange portion provided in the valve holder and a holder seal member for forming a seal between the coupler main body and the valve holder.

4. A coupler as defined in claim 3 wherein the container-inside-outside seal member is made of an O-ring.

5. A coupler comprising a pair of a socket and a plug, said socket and plug respectively comprising a coupler main body mounted on a container main body to form a flow path, a valve for opening and closing the flow path of the coupler main body, a valve holder housing the valve and being mounted on the container main body in sealed state, and energizing means provided in the valve holder for energizing the valve in a closing direction, the coupler main bodies of the socket and plug being capable of being detachably fitted and coupled to each other to open the valves and thereby to enable the coupler main bodies to communicate with each other in the fitted and coupled state, **characterized in that** at least one of the socket and the plug comprises:
a valve seal member provided in a flow path between the valve and the coupler main body which can be opened and closed;
a container seal member for forming a seal between the container main body and a flange portion provided in the valve holder; and
a holder seal member for forming a seal between the coupler main body and the valve holder,
and the valve seal member, the container seal member and the holder seal member are formed integrally around the outer periphery of the flange portion of the valve holder.

6. A coupler as defined in claim 5 wherein the valve seal member, the container seal member and the holder seal member are formed integrally through a communicating section formed in the flange portion of the valve holder.

7. A coupler as defined in claim 5 or 6 wherein a lip portion is formed in at least one of the valve seal member, the container seal member and the holder seal member.

8. A coupler as defined in any of claims 1 - 4, 6 and 7 comprising further a mounting position control section for controlling mounting position of the valve holder which is mounted in a sealed state in such a manner that the valve holder can be sealed and the energizing force by the energizing means can be maintained constant.

9. A coupler as defined in claim 8 wherein the mounting position control section is provided in at least one of the valve holder and the coupler main body.

10. A coupler as defined in claim 8 or 9 comprising the mounting position control section, a valve seal member provided in a flow path between the valve and the coupler main body which can be opened and closed, a container seal member for forming a seal between the container main body and a flange portion provided in the valve holder, and a holder seal member for forming a seal between the coupler main body and the valve holder
